# FASCICULE DE BREVET EUROPEEN

(11) **EP 1 195 970 B1**
(45) Date de publication et mention de la délivrance du brevet: **25.04.2012**
(21) Numéro de dépôt: 01402390.7
(22) Date de dépôt: 18.09.2001
(51) Int. Cl.: H04L 29/06, H04M 7/00

(54) **Equipment de télécommunication permettant la migration du controle d'appel**
Telekommunikationsvorrichtung für Anrufsteuerungsmigration
Telecommunication equipment permitting the migration of call control

(30) Priorité: 05.10.2000 FR 0012724
(43) Date de publication de la demande: 10.04.2002
(73) Titulaire: Alcatel Lucent, 75007 Paris (FR)
(72) Inventeur: Marce, Olivier, 91300 Massy (FR); Anquetil, Laurent Philippe, 75015 Paris (FR)
(74) Mandataire: Sciaux, Edmond

(56) Documents cités:
- TOGA J ET AL: "ITU-T STANDARDIZATION ACTIVITIES FOR INTERACTIVE MULTIMEDIA COMMUNICATIONS ON PACKET-BASED NETWORKS: H.323 AND RELATED RECOMMENDATIONS" COMPUTER NETWORKS AND ISDN SYSTEMS,NORTH HOLLAND PUBLISHING. AMSTERDAM,NL, vol. 31, no. 3, 11 février 1999 (1999-02-11), pages 205-223, XP000700319 ISSN: 0169-7552

## Description

La présente invention est relative à la gestion des communications entre équipements de télécommunication. Elle s'applique particulièrement bien dans le domaine de la téléphonie sur internet, habituellement désignée par l'acronyme VoIP, pour *Voice* over IP (*Internet Protocol*) en langue anglaise.

On appelle contrôleur de communication ou « call control » en anglais, un dispositif ayant pour rôle de réagir à des notifications ou alarmes provenant des équipements mis en oeuvre par la communication ou à des requêtes transmises par un réseau de signalisation.

Il est aussi, par exemple, de la responsabilité du contrôleur de communication de réserver les ressources nécessaires à une communication lorsqu'une demande d'établissement est reçue. De même, le contrôleur de communication a pour charge de libérer ses ressources lors de la terminaison de la communication.

Dans la téléphonie classique, le contrôleur de communication est un dispositif centralisé, quels que soient la technologie utilisée pour transmettre les données relatives à la communication, la capacité du réseau de télécommunication considéré, le type de protocole de signalisation, etc.

Même dans un système de type Réseau Intelligent (ou IN pour *Intelligent Network*, en anglais), dans lequel les fonctions peuvent être distribuées sur plusieurs plates-formes physiques, les communications sont quand même gérées par un unique contrôleur de communication.

Bien que les technologies de type internet soient par nature distribuées, les solutions de téléphonie sur internet (VoIP) ne se sont pas toutes détachées de cette notion centralisée de la gestion de communication. En effet, dans l'ensemble des recommandations H.323 de l'ITU-T (*Internation Telecommunication Union*), la gestion de communication est prise en charge par un des deux terminaux (ou par un de ces représentants) d'une façon prédéterminée.

Une autre approche est donnée par l'article « ITU-T Standardization activities for interactive multimedia communications on packet-based networkds : H323 and Related Recommandations», J. Togo et al.

Mais comme indiqué au paragraphe 5.2, «*The MC [Multipoint Controler] is elected during call establishment; once in place, the MC role does not change location for the duration of the conference* »

Il s'agit-la d'une limitation importante puisque cela oblige à sur-dimensionner les équipements MC afin qu'ils puissent supporter une augmentation de la conférence. Cette solution partage donc certains des inconvénients de l'approche centralisée

Cette solution centralisée n'est pas satisfaisante car l'accroissement rapide du nombre de terminaux connectés a un réseau oblige a sans cesse revoir à la hausse les performances du contrôleur de communications centralisé. Celui-c devient donc rapidement extrêmement coûteux.

Des travaux ont toutefois été entrepris pour rendre cette gestion des communications distribuée.

Parmi ceux-ci on peut citer le protocole SIP (acronyme de *Session Initiation Protocol*, en anglais) défini dans le RFC (*Request For Comments*) numéro 2543 de l'IETF (*Internet Engineering Task Force*).

Selon cette solution, la communication n'est pas contrôlée par un unique contrôleur de communications, mais par plusieurs terminaux « intelligents » (c'est-a-djre pouvant exécuter les fonctions d'un contrôleur de Communications), chaque terminal exécutant une partie des fonctions nécessaire à la gestion d'une communication.

Selon cette solution, tous les équipements prenant part à la communication (terminaux, représentant des terminaux, systèmes de redirections, etc.) sont parties prenantes du contrôle de la communication. Chacun de ces systèmes rend une fonction particulière du contrôle de la communication. C'est la réunion de toutes ces fonctions qui constitue le contrôle de la communication.

Les avantages de cette solution sont bien évidemment la distribution de la charge entre les différents équipements impliqués, et également à simplicité de développement et de maintenance des application, ces dernières ayant à rendre un nombre restreint de fonctions. « intelligents » (c'est-à-dire pouvant exécuter les fonctions d'un contrôleur de communications), chaque terminal exécutant une partie des fonctions nécessaire à la gestion d'une communication.

Selon cette solution, tous les équipements prenant part à la communication (terminaux, représentant des terminaux, systèmes de redirections, etc.) sont parties prenantes du contrôle de la communication. Chacun de ces systèmes rend une fonction particulière du contrôle de la communication. C'est la réunion de toutes ces fonctions qui constitue le contrôle de la communication.

Les avantages de cette solution sont bien évidemment la distribution de la charge entre les différents équipements impliqués, et également la simplicité de développement et de maintenance des applications, ces dernières ayant à rendre un nombre restreint de fonctions.

En revanche, il est clair que la contrepartie de cette distribution est la difficulté d'avoir une vue globale de la communication, le contrôle étant réparti entre les différents équipements. Cela est d'autant plus vrai dans le cas ou les équipements mis en oeuvre dans le contrôle de la communication appartiennent à des opérateurs différents.

La présente invention vise à résoudre les problèmes liés à la centralisation du contrôle de communication tel qu'il est mis en oeuvre classiquement, ou selon l'ensemble de recommandations H.323, ainsi qu'à ceux dus à une distribution du contrôle sur de multiples équipements.

Pour ce faire, l'invention a pour objet un équipement de télécommunication permettant de mettre en oeuvre une communication avec un ou plusieurs autres équipements de télécommunication connectés par un réseau de télécommunication. Au moins certains de ces équipements de télécommunication comportent des contrôleurs de communication aptes à gérer la communication. L'équipement se caractérise en ce que le contrôleur de communication comporte un gestionnaire de mobilité pour négocier avec les autres contrôleurs de communication et décider, de façon conjointe avec ceux-ci, lequel, ou lesquels, doit gérer ladite communication à un moment donné.

L'invention a aussi pour objet un procédé de gestion d'une communication, cette communication étant gérée à un instant donné par un contrôleur de communication. Le procédé se caractérise en ce qu'il comporte des étapes de :
- choix d'un contrôleur de communication initial gérant la communication
- mesure pendant cette communication, de la satisfaction de critères,
- décision en fonction de cette mesure, du changement du contrôleur de communication gérant la communication, et
- en cas de décision de changement, transmission d'informations relatives à la communication vers le contrôleur de communication choisi.

Selon l'invention, le contrôle de la communication est, à un moment donné, localisé sur un seul équipement utilisé dans la communication, mais il peut être déplacé en cours de communication sur l'un ou l'autre des équipements.

Cette mobilité temporelle de la fonction de contrôle de communication permet d'une part d'optimiser l'utilisation des ressources lors d'une communication, en la déplaçant sur l'équipement le plus à même d'apporter les services demandés, à un instant donné, et permet d'autre part de garder une vision globale du contrôle, ce dernier étant localisé sur un seul équipement.

L'invention et ses avantages apparaîtront de façon plus claire dans la description d'une mise en oeuvre qui va suivre, en liaison avec les figures jointes.

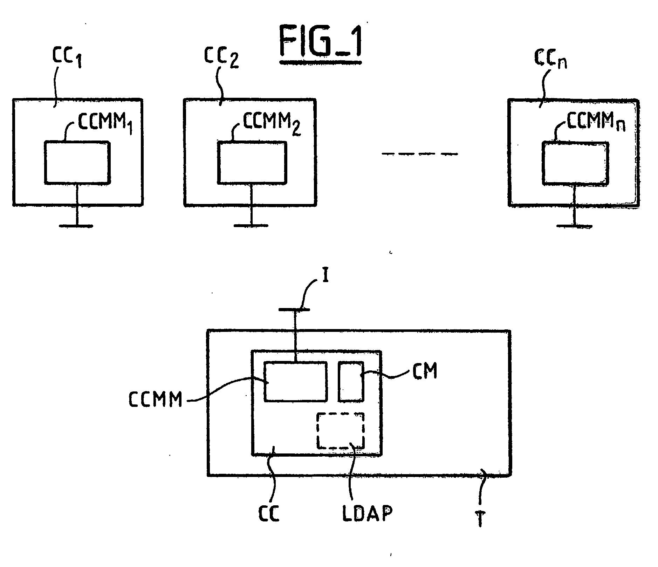

La figure 1 illustre une mise en oeuvre d'un équipement de télécommunication selon l'invention.

Dans la mise en oeuvre illustré par la figure 1, l'équipement de télécommunication est un terminal.

Ce terminal de communication T comporte un contrôleur de communication CC. Ce contrôleur de communication dispose de moyens de contrôle CM. Ces moyens de contrôle CM sont classiques en soi et mettent en oeuvre des protocoles existants comme SIP ou les protocoles décrits dans la recommandation H.323 de l'ITU-T (International Telecommunication Union) intitulée « *Packet-based multimedia communications systems* ».

Le contrôleur de communication CC comporte en outre un gestionnaire de mobilité CCMM (pour Call Control Mobility Manager, en anglais).

Ce gestionnaire de mobilité CCMM est apte à négocier avec les autres contrôleurs de communication CC₁, CC₂... CCₙ et à décider, de façon conjointe avec ceux-ci, lequel d'entre eux doit gérer ladite communication à un moment donné.

Ce choix peut être fait selon plusieurs critères parmi lesquels on peut citer à titre d'exemples :
- Le nombre et/ou la qualité des fonctions fournies par les moyens de contrôle de chacun des contrôleurs de communication impliqués CC, CC₁, CC₂...CCₙ. En effet, un moyen de contrôle peut ne pas être en mesure des gérer des communications de type « vidéo-conférence », par exemple.
- La charge des ressources de traitement (notamment, le microprocesseur embarqué dans les terminaux) supportant les contrôleurs de communication CC, CC₁, CC₂... CCₙ.
- L'accès à des ressources extérieures. Par exemple, si on doit faire appel à une base de données, il peut être intéressant de choisir le contrôleur de communication ayant l'accès le plus facile à cette base de données.

Bien évidemment, cette liste de critères n'est nullement limitative, et le gestionnaire de mobilité CCMM peut prendre en compte autant de critères que nécessaire.

Selon une mise en oeuvre de la présente invention, la communication est initialement sous le contrôle d'un contrôleur de communication arbitraire. Le choix du contrôleur de communication initial peut consister à utiliser celui du terminal appelant, sans que cela soit limitatif dans la manière de faire ce choix.

Selon une mise en oeuvre de l'invention, les gestionnaires de mobilité peuvent communiquer entre eux de différentes manières, comme par exemple, deux à deux, ou en diffusion de type "broadcast" ou "multicast". De même le déclenchement de la communication entre gestionnaires de mobilité peut se faire de différentes façons. Par exemple, la communication peut être initiée sur requête du gestionnaire de mobilité du contrôleur de communication ayant le contrôle en fonction de différents critères. Ces critères peuvent par exemple être le dépassement d'un seuil, ou bien le dépassement d'un intervalle de temps donné.

La négociation, c'est-à-dire, l'échange d'informations entre les différents gestionnaires de mobilité dans le but de déterminer lequel des contrôleurs de communication prend en charge la gestion de la communication, peut se faire de n'importe quelle manière à la portée de l'homme de l'art, sans que cela ne limite la portée de la présente invention.

Parmi les possibilités de codage et de transport de l'information, on peut citer, à titre d'exemple, l'utilisation des Remote Procedure Calls (RPC) ou des Remote Method Invocation (RMI). Une autre possibilité est l'utilisation d'un bus logiciel conforme au standard CORBA tel que spécifié par l'OMG (Open *Management Group*), ou bien le transport d'information sur un canal de communication de type "socket".

Selon la mise en oeuvre illustrée par la figure 1, le gestionnaire de mobilité peut comporter une interface de mobilité I, lui permettant de réaliser la négociation avec les autres contrôleurs de communication. Cette interface de mobilité I peut par exemple être conforme au standard CORBA (*Common Object Request Broker Architecture*) mentionné ci dessus.

Les informations échangées lors de cette négociation peuvent par exemple être codées suivant le standard XML (eXtended Mark-up Language).

De même, la décision finale peut être prise par un ou plusieurs CCMM, selon une politique quelconque.

Selon une mise en oeuvre de l'invention, la liste des contrôleurs de communication prenant part à la communication peut être fixée de manière statique, ou bien mise à jour dynamiquement en fonction des contrôleurs de communication disponibles. Cette mise à jour peut se faire par un processus d'inscription d'un contrôleur de communication nouvellement disponible, ou bien au contraire par une tierce autorité. Cette liste peut être stockée par les contrôleurs de communication, de manière répliquée ou partagée, ou bien par un système extérieur aux contrôleurs de communication.

Ce choix d'un contrôleur de communication en charge de la gestion d'une communication peut être effectué une première fois au moment de l'établissement de la communication.

Comme évoqué précédemment, il peut aussi être remis en cause et modifié durant la durée de vie de la communication, en fonction de critères qui peuvent être les mêmes ou différents de ceux ayant servi au choix lors de l'établissement. Pour ce faire, le gestionnaire de mobilité a pour charge de mesurer, lors de la communication, la satisfaction de critères.

Par exemple, la charge de la ressource de traitement supportant un contrôleur de communication peut évoluer avec le temps, en fonction du nombre de communications dans lesquelles elle est impliquée. Aussi, il peut être intéressant de déplacer la gestion d'une communication depuis un contrôleur de communication momentanément surchargé vers un contrôleur de communication plus disponible.

De même, une communication peut voir sa nature évoluer avec le temps : par exemple, une communication entre deux correspondants peut se transformer en communication à 3 ou plus (conférence), voir impliquer l'échange de données de type vidéo (vidéoconférence). Ce changement de nature peut nécessiter le changement du contrôleur de communication en charge de la gestion de cette communication.

Un autre exemple est l'appel à des informations extérieures. Une communication préalablement établie peut subitement nécessiter l'utilisation de données par exemple stockées dans une base de données. En ce cas, il peut être intéressant de changer le contrôleur de communication en charge de la gestion de cette communication afin que ce soit celui qui est le plus près qui en ait la gestion. Ceci permet de gagner du temps dans l'exécution des requêtes, est plus sûr d'un point de vue sécurité et encombre moins le réseau.

Pour ce faire, le gestionnaire de mobilité CCMM comporte donc des moyens pour transmettre des informations relatives à la communication à transférer à un autre gestionnaire de mobilité. Cette transmission peut avoir lieu dans les deux sens, suivant que le gestionnaire de mobilité prend en charge une nouvelle communication précédemment gérée par un autre contrôleur de communication CC₁, CC₂... CCₙ ou qu'au contraire, il transfère une communication dont il avait la charge vers un de ces autres contrôleurs de communication.

La transmission de ces informations entre les gestionnaires de mobilité peut être effectuée de façon similaire que lors de la négociation, au travers de la même interface de mobilité ou d'une interface différente.

L'exemple suivant décrit le mécanisme se déroulant lorsqu'un critère de migration est rempli, pour une mise en oeuvre particulière de l'invention. Le gestionnaire de mobilité CCMM appartenant au contrôleur de communication CC en charge du contrôle de la communication rentre en communication avec les autres contrôleurs de communication CC₁ à CCₙ, possédant des gestionnaires de mobilité, respectivement CCMM₁ à CCMMₙ, lorsqu'un plafond d'utilisation des ressources de l'équipement sur lequel il s'exécute est atteint. Pour cela, il obtient tout d'abord la liste des contrôleurs de communication pouvant être utilisés dans la communication en cours, et il rentre en communication avec chacun d'entre eux. Il les informe de l'état de la communication, de ses paramètres, et de l'état de ses propres ressources. Les contrôleurs de communication, par le biais de leur gestionnaire de mobilité, négocient alors lequel doit prendre le contrôle. Lorsque le gestionnaire de mobilité CCMM a trouvé un gestionnaire de mobilité, CCMM₂ par exemple, acceptant de prendre le contrôle de la communication, il transfert toutes les informations qu'il possède sur cette communication au gestionnaire de mobilité CCMM₂, et si besoin, selon la technique de transfert des données utilisée, informe les équipements prenant part à cette communication, de ce transfert.

Selon une mise en oeuvre particulière de l'invention, le gestionnaire de mobilité CCMM comporte des moyens pour communiquer avec un gestionnaire de ressources. Ces moyens peuvent être une base utilisant le protocole de mise à disposition des données LDAP, ou tout autre mécanisme équivalent. La portée de la présente invention n'est pas limitée par le mécanisme de requête ni de transfert des données utilisé, ni par le type de base de données mise en place.

## Revendications

1. Équipement de télécommunication (T) permettant de mettre en oeuvre; une communication avec un ou plusieurs autres équipements de télécommunication connectés par un réseau de télécommunication, au moins certains desdits équipements de télécommunication comportant des contrôleurs de communication (CC, CC₁, CC₂) aptes a gérer ladite communication, le contrôleur de communication dudit équipement de télécommunication comportant un gestionnaire de mobilité (CCMM) pour négocier avec les autres contrôleurs de communication et décider, de façon conjointe avec lesdits autres contrôleur de communication, lequel au lesquels desdits contrôleurs de communication doit gérer ladite communication, **caractérisé en ce qu'**il comporte en outre des moyens pour échanger des informations relatives à ladite communication avec un autre gestionnaire de mobilité afin de changer le contrôleur de communication gérant ladite communication.

2. Équipement de télécommunication selon la revendication 1, dans lequel ledit gestionnaire de mobilité comporte une interface de mobilité (1) pour permettre de négocier avec lesdits autres contrôleurs de communication.

3. Équipement de de télécommunication selon l'une des, revendications précédentes, dans lequel ledit gestionnaire de mobilité comporte des moyens d'informer certains desdits équipements du changement du contrôleur de communication gérant ladite communication.

4. Équipement de télécommunication selon l'une des revendications précédentes, dans lequel les informations relatives à ladite communication sont représentées suivant le standard XML.

5. Équipement de télécommunication selon l'une des revendications précédentes, dans lequel ledit gestionnaire de mobilité dispose d'un moyen d'accès à une liste de contrôleurs de communication utilisables pour ladite communication.

6. Équipement de télécommunication selon la revendication précédente, dans lequel ledit gestionnaire de mobilité dispose d'un moyen pour s'inscrire dans ladite liste.

7. Équipement de télécommunication selonl'une des revendications précédentes, dans lequel ledit gestionnaire de mobilité comporte des moyens pour communiquer avec un gestionnaire de ressources

8. Procédé de gestion d'une communication, ladite communication étant gérée à un instant donné par un contrôleur de communication, **caractérisé en ce qu'**il comporte des étapes de ;
• choix d'un contrôleur de communication initial gérant ladite communication
• mesure lors de la communication de la satisfaction de critères,
• décision en fonction de ladite mesure du changement du contrôleur de communication gérant ladite communication, et
• en cas de décision de changement, transmission d'informations relatives à la communication vers le contrôleur de communication choisi.

## Claims

1. A telecommunication device (T) for implementing a communication with one or more other telecommunication devices connected by a telecommunication network, at least some of said telecommunication devices comprising communication controllers (CC, CC₁, CC₂) capable of managing said communication, the communication controller of said telecommunication device comprising a mobility manager (CCMM) for negotiating with the other communication controllers and deciding, in conjunction with said other communication controllers, which of said communication controllers must manage said communication,
**characterized in that** it further comprises means for exchanging information related to said communication with another mobility manager in order to change the communication controller managing said communication;

2. A telecommunication device according to claim 1, wherein said mobility manager comprises a mobility interface (1) for making it possible to negotiate with said other communication controllers.

3. A telecommunication device according to one of the preceding claims, wherein said mobility manager comprises means for informing some of said devices about the change in the communication controller managing said communication.

4. A telecommunication device according to one of the preceding claims, wherein the information related to said communication is represented using the XML standard.

5. A telecommunication device according to one of the preceding claims, wherein said mobility manager has a means of accessing a list of communication controllers that may be used for said communication.

6. A telecommunication device according to the preceding claim, wherein said mobility manager has a means of registering itself on said list.

7. A telecommunication device according to one of the preceding claims, wherein said mobility manager comprises means for communicating with a resource manager.

8. A method for managing a communication, said communication being managed at a given moment by a communication controller, **characterized in that** it comprises steps of:
• choosing an initial communication controller managing said communication,
• measuring the meeting of criteria during the communication;
• deciding, based on said measurement, whether to change the communication controller managing said communication, and
• if a decision is made to change, transmitting information related to the communication to the chosen communication controller.

## Patentansprüche

1. Telekommunikationsvorrichtung (T), welche es ermöglicht, eine Verbindung mit einer oder mehreren anderen über ein Telekommunikationsnetzwerk angeschlossenen Telekommunikationsvorrichtungen einzuleiten, wobei zumindest einige der besagten Telekommunikationsvorrichtungen Kommunikations-Controller (CC, CC₁, CC₂) aufweisen, die dazu ausgelegt sind, die besagte Verbindung zu verwalten, wobei der Kommunikations-Controller der besagten Telekommunikationsvorrichtung einen Mobilitätsmanager (CCMM) umfasst, um mit den anderen Kommunikations-Controllern zu verhandeln und gemeinsam mit den besagten anderen Kommunikations-Controllern zu entscheiden, welcher oder welche der besagten Kommunikations-Controller die besagte Verbindung verwalten soll,
**dadurch gekennzeichnet, dass** sie weiterhin Mittel zum Austauschen von Informationen in Bezug auf die besagte Verbindung mit einem anderen Mobilitätsmanager umfasst, um den Kommunikations-Controller, der die besagte Verbindung verwaltet, zu wechseln.

2. Telekommunikationsvorrichtung nach Anspruch 1, wobei der besagte Mobilitätsmanager eine Mobilitätsschnittstelle (1) aufweist, um das Verhandeln mit den besagten anderen Kommunikations-Controllern zu ermöglichen.

3. Telekommunikationsvorrichtung nach einem der vorstehenden Ansprüche, wobei der besagte Mobilitätsmanager Mittel umfasst, um bestimmte der besagten Vorrichtungen über den Wechsel des Kommunikations-Controllers, der die besagte Verbindung verwaltet, zu informieren.

4. Telekommunikationsvorrichtung nach einem der vorstehenden Ansprüche, wobei die Informationen in Bezug auf die besagte Verbindung gemäß dem XML-Standard dargestellt werden.

5. Telekommunikationsvorrichtung nach einem der vorstehenden Ansprüche, wobei der besagte Mobilitätsmanager über Mittel für den Zugriff auf eine Liste der Kommunikations-Controller, die für die besagte Verbindung verwendbar sind, verfügt.

6. Telekommunikationsvorrichtung nach einem der vorstehenden Ansprüche, wobei der besagte Mobilitätsmanager über ein Mittel verfügt, um sich in die besagte Liste einzutragen.

7. Telekommunikationsvorrichtung nach einem der vorstehenden Ansprüche, wobei der besagte Mobilitätsmanager Mittel zur Kommunikation mit einem Ressourcenmanager aufweist.

8. Verfahren zur Verwaltung einer Verbindung, wobei die besagte Verbindung zu einem gegebenen Zeitpunkt von einem Kommunikations-Controller verwaltet wird, **dadurch gekennzeichnet, dass** es die folgenden Schritte umfasst:
• Auswählen eines ursprünglichen Kommunikations-Controllers, der die besagte Verbindung verwaltet,
• Messen, während der Verbindung, der Erfüllung der Kriterien,
• Entscheiden, in Abhängigkeit von der besagten Messung, des Wechsels des Kommunikations-Controllers, der die besagte Verbindung verwaltet, und
• wenn ein Wechsel entschieden wird, Übertragen von Informationen in Bezug auf die Verbindung an den ausgewählten Kommunikations-Controller.
